# EUROPÄISCHE PATENTANMELDUNG

(11) **EP 0 885 931 A2**
(43) Veröffentlichungstag der Anmeldung: **23.12.1998**
(21) Anmeldenummer: 98110628.9
(22) Anmeldetag: 10.06.1998
(51) Int. Cl.: C08L 83/04, C08K 5/54

(54) **Alkoxyvernetzende RTV1-Siliconkautschuk-Mischungen**

(30) Priorität: 17.06.1997 DE 19725501
(71) Anmelder: Hüls Silicone Gesellschaft mit beschränkter Haftung, D-01610 Nünchritz (DE)
(72) Erfinder: Scheim, Uwe, Dr. rer. nat., 01640 Coswig (DE); Bankwitz, Uwe, Dr. rer. nat., 01640 Coswig (DE); Lehnert, Robert, Dr. rer. nat., 01069 Dresden (DE); Jenkner, Peter, Dr. rer. nat., 79618 Rheinfelden (DE)
(74) Vertreter: Zöllner, Gudrun

(57) **Zusammenfassung**

Die Erfindung betrifft alkoxyvernetzende RTV1-Siliconkautschuk-Mischungen auf der Basis von hydroxyterminierten Polydiorganosiloxanen, welche ein Trialkoxysilan mit einem substituierten Amidoalkylrest enthalten.

## Beschreibung

Die Erfindung betrifft alkoxyvernetzende RTV1-Siliconkautschuk-Mischungen auf der Basis von hydroxyterminierten Polyorganosiloxanen, welche ein Trialkoxysilan mit einem substituierten Amidoalkylrest enthalten.

Unter Ausschluß von Wasser lagerfähige, bei Zutritt von Wasser bei Raumtemperatur zu Elastomeren vulkanisierende Einkomponenten-Siliconkautschukmischungen (RTV1) sind bekannt. Die Vulkanisation der Mischungen kann sauer, z. B. bei Anwesenheit von Acetoxysilanen, basisch, z. B. mittels Aminosilanen, oder neutral, z. B. durch Verbindungen, die Oximo- oder Alkoxygruppen aufweisen, erfolgen. Neutral vernetzende RTV1-Systeme werden vor allem dann benötigt, wenn die bei der Aushärtung der Mischungen entstehenden Spaltprodukte den Untergrund nicht beeinflussen sollen, beispielsweise beim Verfugen von Beton oder metallischen Werkstoffen.

Die seit langem bekannten acetat-, amin- und oximvernetzenden Typen werden hergestellt, indem ein OH-terminiertes Polydimethylsiloxan mit einem Weichmacher, der meist ein methylterminiertes Polydimethylsiloxan ist, einem Acetoxy-, Amino- oder Oximosilan als Vernetzer, einem aktiven Füllstoff wie zum Beispiel hochdisperser Kieselsäure, einem Katalysator, der meist eine Dialkylzinnverbindung ist, in dieser Reihenfolge, vermischt wird. Gegebenenfalls werden noch weitere Zusätze, wie Härtungsbeschleuniger, Pigmente, Verarbeitungshilfsmittel und weiteren Füllstoffe, zugesetzt. Außer für einige sehr spezielle Anwendungszwecke, bei denen fließfähige Massen benötigt werden, sind vor allem standfeste Mischungen, die nur hochdisperse Kieselsäure als Füllstoff enthalten, gewünscht. Als Mischaggregate werden meist einfache Planetenmischer oder Dissolvermischer eingesetzt. Es gibt auch Verfahren, die eine kontinuierliche Mischungsherstellung, z.B. mit Extrudern, gestatten.

Im Falle von alkoxyvernetzenden RTV1-Massen kann jedoch bis aufwenige Ausnahmefälle kein OH-terminiertes Polydimethylsiloxan eingesetzt werden. Wenn man in der oben beschriebenen Art, bei Verwendung eines Alkoxysilans als Vernetzer, die Komponenten mischt, tritt bereits bei der Mischungsherstellung eine Vulkanisation ein. Deshalb wird für diese Art von RTV1-Mischungen in einer Vorstufe zunächst separat ein Polymer durch Umsetzung von hydroxyterminierten Polydiorganosiloxanen mit Alkoxysilanen in Gegewart von Katalysatoren hergestellt (EP 137 883, EP 304 701, EP 559 045 u.v.a.). Als Alkoxysilan wird meist Methyltrimethoxysilan eingesetzt. Darüber hinaus sind auch Verfahren bekannt, bei denen Verbindungen wie Aminopropyltrimethoxysilan, Aminoethylaminopropyltrimethoxysilan, Glycidoxypropyltrimethoxysilan und Methacryloxypropyltrimethoxysilan eingesetzt werden (DE 44 05 851). An die Herstellung des Alkoxyendgruppenpolymers schließt sich dann die Mischungsherstellung an, die jetzt wie oben beschrieben erfolgen kann. Die separate Herstellung des speziellen Polymers ist jedoch umständlich und erfordert zusätzlichen Aufwand.

Daher wird angestrebt, bei der Herstellung von alkoxyvernetzenden RTV1-Massen die leicht zugänglichen und auch für die anderen Typen verwendeten hydroxyterminierten Polydiorganosiloxane direkt als Polymere einzusetzen. So sind zum Beispiel in EP 384 609 und EP 543 615 mit sehr viel Füllstoff versetzte, methoxyvernetzende Massen beschrieben, die unter Verwendung von OH-terminierten Polydimethylsiloxanen hergestellt wurden. Diese Methode funktioniert aber nur dann, wenn man zunächst das Polymer, den Weichmacher und die Füllstoffe (in diesem Falle eine Kombination aus gefällter und gemahlener Kreide) miteinander mischt und dann anschließend Methyltrimethoxysilan als Vernetzer und den Vernetzungskatalysator zusetzt. Dabei entsteht zunächst ein extrem hochviskoses bis zum Teil sogar gummielastisches Material, das nur unter Verwendung spezieller Mischtechnologien verarbeitet werden kann. Die normalerweise für RTV1-Massen verwendete Mischtechnologie ist nicht verwendbar. Außerdem beschränkt sich diese Verfahrensweise auf hochgefüllte methoxyvernetzende Massen. Bei Verwendung der bisher beschriebenen Ethoxysilane erfolgt schon während des Mischens oder während der Lagerung der fertigen Pasten eine vorzeitige Vernetzung, d. h., die erhaltenen Produkte sind nicht ausreichend lagerstabil. Für transparente, nur mit hochdisperser Kieselsäure gefüllte Systeme ist diese Methode überhaupt nicht anwendbar. Es ist bekannt, daß beim Mischen von OH-Endgruppenpolymer mit Kieselsäure ohne Vernetzer eine sehr hochviskose Paste entsteht, die schnell zu einer harten krümeligen Masse verstrammt. Bei der Zugabe von Vernetzer zu einer solchen Mischung geht die Standfestigkeit der Pasten verloren. Hauptsächlich werden aber gerade solche standfesten Massen benötigt. Darüber hinaus ist die vorzeitige Vernetzung von Massen, die nach dem eben beschriebenen Stand der Technik hergestellt werden, nicht zu beherrschen.

Weiterhin ist es wegen der Toxizität des Methanols wünschenswert, alkoxyvernetzende RTV1-Massen herstellen zu können, bei denen nur unbedenkliche Spaltprodukte, wie z. B. Ethanol, entstehen.

Die Aufgabe der Erfindung bestand daher darin, alkoxyvernetzende RTV1-Siliconkautschuk-Mischungen bereitzustellen, für die es nicht erforderlich ist, in einem vorgelagerten Schritt spezielle alkoxyterminierte Polymere herzustellen. Die Massen sollen aus OH-Endgruppenpolymeren unter Verwendung der auch für andere RTV1-Massen benutzten Mischtechnologien herstellbar sein. Insbesondere sollen so transparente, standfeste, alkoxyvernetzende RTV1-Pasten hergestellt werden können.

Gegenstand der Erfindung sind alkoxyvernetzende RTV1-Siliconkautschuk-Mischungen, welche
(a) mindestens ein hydroxyterminiertes Polydiorganosiloxan der allgemeinen Formel (I)

   HO(SiR¹₂O)ₙH (I)

   worin R¹ unabhängig voneinander unsubstituierte oder substituierte Alkyl- und/oder Alkenyl- und/oder Arylreste, bevorzugt Methyl, bedeutet und n Werte von 20 bis 2000, bevorzugt Werte von 100 bis 1600 annimmt, und
(b) mindestens ein Alkoxysilan und/oder dessen partielles Hydrolysat der allgemeinen Formel (II) 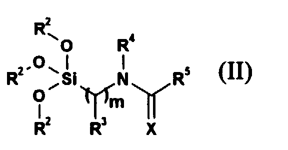 worin R² unabhängig voneinander unsubstituierte und/oder substituierte Alkyl- und/oder Silylreste, R³ unabhängig voneinander unsubstituierte und/oder substituierte, gesättigte und/oder ungesättigte Alkyl- und/oder Arylreste und/oder Wasserstoff R⁴ unsubstituierte oder substituierte, gesättigte oder ungesättigte Alkyl-, Aryl- oder Acylreste oder Wasserstoff, R⁵ unsubstituierte oder substituierte, gesättigte oder ungesättigter Alkyl- oder Arylreste oder Wasserstoff und X Sauerstoff oder Schwefel bedeuten, wobei die Reste R⁴ und R⁵ alicyclische oder heterocyclische Ringe bilden können, und m entweder 1 oder 2 ist, sowie
(c) mindestens ein Organosilan und/oder dessen partielles Hydrolysat der allgemeinen Formel (III)

   R¹ₓSi(OR²)₄₋ₓ (III)

   wobei R¹ und R² die oben angegebene Bedeutung aufweisen und x entweder 0 oder 1 ist.

Die eingesetzten hydroxyterminierten Polydiorganosiloxane der allgemeinen Formel (I) sind bekannt. Üblicherweise werden sie entweder durch Polymerisation von cyclischen Siloxanen in Gegenwart stark basischer Katalysatoren und geringer Mengen Wasser oder durch Polykondensation von kurzkettigen linearen Oligomeren mit OH-Endgruppen hergestellt. Da die zur Synthese verwendeten Ausgangsverbindungen neben den hauptsachlich erwünschten difunktionellen Einheiten aber auch noch tri- und tetrafunktionelle Einheiten enthalten können, sind stets auch Verbindungen in den Polymeren enthalten, die eine oder auch mehrere Verzweigungen im Molekül enthalten. Je größer der Gehalt an tri- oder tetrafunktionellen Einheiten in den Ausgangsmaterialien und je größer die Molmasse des Polymeren ist, desto größer wird die Wahrscheinlichkeit, dass die Moleküle Verzweigungsstellen enthalten. Bevorzugte Substituenten R⁵ sind Methyl-, Ethyl-, Phenyl-, Vinyl- und Trifluorpropylreste. Besonders bevorzugt sind wegen der leichten Verfügbarkeit α,ω-Dihydroxypolydimethylsiloxane, bei denen in der Formel (I) n Werte von 100 bis 1600 annimmt. Obwohl die Verwendung rein linearer Polymere bevorzugt ist, können auch solche Polymere verwendet werden, die Verzweigungsstellen enthalten. In der anwendungsfertigen RTV1-Siliconkautschuk-Mischung sind üblicherweise 30 bis 90 Gew.-% Polydiorganosiloxane der allgemeinen Formel (I) enthalten.

Als Alkoxysilane der allgemeinen Formel (II) können beispielsweise Verbindungen eingesetzt werden, bei welchen als Rest R² keine Silylgruppe gebunden sind, bzw. deren partielle Hydrolysate. Beispiele dafür sind N-1-(Triethoxysilyl)ethylpyrrolidon-(2), N-2-(Triethoxysilyl)ethylpyrrolidon-(2), N-1-(Triethoxysilyl)ethyl-N-methylacetamid, N-2-(Triethoxysilyl)ethyl-N-methylacetamid oder deren Gemische.

Weiterhin können als Alkoxysilane der allgemeinen Formel (II) die Umsetzungsprodukte von Alkoxysilanen der allgemeinen Formel (II), die keine Silylgruppe enthalten, bzw. von deren partiellen Hydrolysaten mit Organosilanen bzw. deren partiellen Hydrolysaten der allgemeinen Formel (III) eingesetzt werden, beispielsweise N-1-[(Methyldiethoxysiloxy)diethoxysilyl]ethyl-pyrrolidon-(2). Beispiel für ein verwendetes partielles Hydrolysat von Alkoxysilanen der allgemeinen Formel (II) ist 1,3-Bis(1'-N-Methylacetamidoethyl)-1,1,3,3,-tetraethoxydisiloxan. 1-N-[(Diethoxymethylsiloxy)diethoxysilyl]ethylpyrrolidon-(2) ist ein Beispiel für ein durch Kohydrolse erhaltenes Umsetzungsprodukt von Alkoxysilanen der allgemeinen Formel (II) mit Organosilanen der allgemeinen Formel (III).

Weitere Beispiele für Alkoxysilane der allgemeinen Formel (II) sind:
N-1-(Triethoxysilyl)ethylsuccinimid 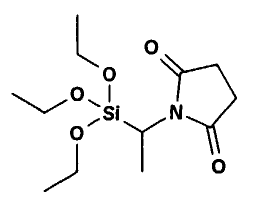 R²= CH₂CH₃, R³= CH₃, R⁴―R⁵= -CO(CH₂)₂-, X= O, m= 1
N-2-(Triethoxysilyl)ethylsuccinimid 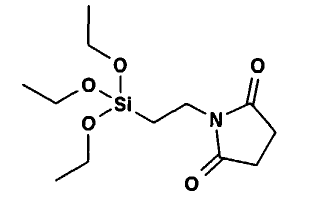 R² = CH₂CH₃, R³= H, R⁴―R⁵= -CO(CH₂)₂-, X= O, m= 2
N-1-(Triethoxysilyl)ethylphthalimid 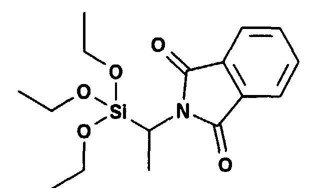 R²= CH₂CH₃, R³= CH₃, R⁴―R⁵= -COC₆H₄-, X= O, m= 1
N-2-(Triethoxysilyl)ethylphthalimid 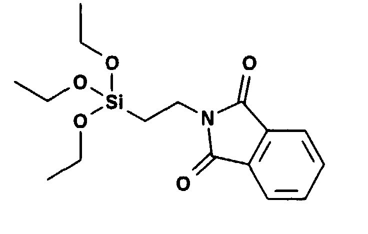 R²= CH₂CH₃, R³= H, R⁴―R⁵= -COC₆H₄-, X= O, m= 2
N-1-(Trimethoxysilyl)ethyl-pyrrolidon-(2) 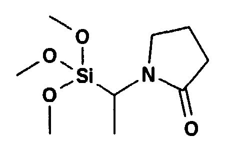 R²= R³= CH₃, R⁴―R⁵= -(CH₂)₃-, X= O, m= 1
N-2-(Trimethoxysilyl)ethyl-pyrrolidon-(2) 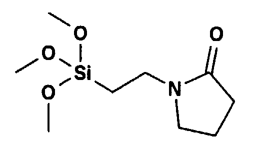 R²= CH₃, R³= H, R⁴―R⁵= -(CH₂)₃-, X= O, m= 2
N-1-(Tri-n-propoxysilyl)ethyl-N-methylacetamid 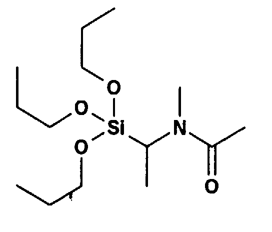 R²= CH₂CH₂CH₃, R³= R⁴= R⁵= CH₃, X= O, m= 1
N-2-(Tri-n-propoxysilyl)ethyl-N-methylacetamid 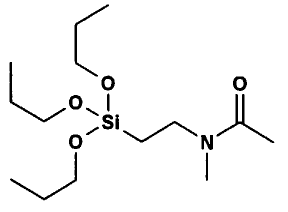 R²= CH₂CH₂CH₃, R³=H, R⁴= R⁵= CH₃, X= O, m= 2.
N-1-(Tris(2-methoxyethoxy)silyl)ethyl-N-methylthioacetamid 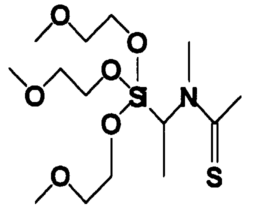 R²= CH₂CH₂OCH₃, R³= R⁴= R⁵= CH₃, X= S, m= 1
N-2-(Tris(2-methoxyethoxy)silyl)ethyl-N-methylthioacetamid 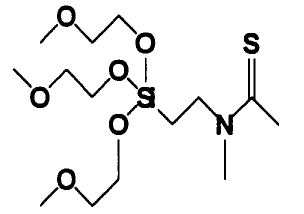 R²= CH₂CH₂OCH₃, R³= H, R⁴= R⁵= CH₃, X= S, m= 2

Diese Verbindungen können auch als Gemische eingesetzt werden.

Die erfindungsgemäß eingesetzten Alkoxysilane der allgemeinen Formel (II) werden beispielsweise erhalten durch Addition des entsprechenden Trialkoxysilans an das entsprechende N-vinylsubstituierte Amid.

Die einzusetzende Menge des Alkoxysilanes der allgemeinen Formel (II) richtet sich nach dem Gehalt an siliciumgebundenen Hydroxylgruppen des Polydiorganosiloxanes der allgemeinen Formel (I) und ist vom Fachmann auf die jeweiligen Verhältnisse leicht anzupassen. Vorzugsweise ist das Alkoxysilan der allgemeinen Formel (II) in Mengen zwischen 0,1 und 10 Gew.-%, besonders bevorzugt 1 bis 5 Gew.-% bezogen aufdie Gesamtmischung, enthalten.

Das Organosilan und/oder dessen partielles Hydrolysat der allgemeinen Formel (III) ist in der RTV1-Siliconkautschuk-Mischung üblicherweise als Vernetzer bis zu 10 Gew-% enthalten. Beispiele dafür sind Methyltriethoxysilan, Vinyltriethoxysilan, Tetraethoxysilan, Phenyltriethoxysilan, Tetrakis(2-methoxyethoxy)-silan, Tetrakis(2-butoxyethoxy)silan, N-1-(Triethoxysilyl)ethylpyrrolidon-(2), und N-1-(Triethoxy-silyl)ethyl-N-methylacetamid bzw. die bei den Synthesen der letzten beiden Produkte entstehenden Gemische der N-1-(Triethoxysilyl)ethyl- und N-2-(Triethoxysilyl)ethylamide. Es können auch beliebige Gemische der erwähnten Verbindungen eingesetzt werden.

Übliche weitere Bestandteile der RTV1-Mischungen sind:
(d) bis zu 40 Gew.-% Weichmacher, bevorzugt trimethylsilylterminierte Polydimethylsiloxane mit Viskositäten zwischen 0,05 und 10 Pas. Besonders bevorzugt sind Viskositäten zwischen 0,1 und 1 Pas. Es können jedoch auch methylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwobl besonders bevorzugt lineare trimethylsilylterminierte Polydimethylsiloxane als Weichmacher eingesetzt werden, könne auch solche Verbindungen verwendet werden, die einige Verzweigungsstellen enthalten, die dadurch entstehen, daß in den zur Herstellung der Weichmacher dienenden Ausgangsprodukten kleine Mengen tri- oder tetrafunktioneller Silane enthalten sind. Es ist aber auch möglich anstatt der Siloxane, bis zu 25 Gew.-%, bezogen auf die Gesamtmischung, andere organische Verbindungen, wie z. B. bestimmte aromatenfreie Kohlenwasserstoffgemische, als Weichmacher einzusetzen.
(e) 0,01 bis 5 Gew-% eines Katalysators um eine genügend hohe Vernetzungsgeschwindigkeit zu erreichen. Üblich sind Dialkylzinnverbindungen, wie z. B. Dibutylzinndilaurat oder -diacetat, bzw. Titanverbindungen, wie Tetrabutyl- oder Tetraisopropyltitanat oder Titanchelate. Es können auch Katalysatorgemische eingesetzt werden.
(f) bis zu 30 Gew-% verstärkende Füllstoffe und/oder bis zu 60 Gew-% nichtverstärkende Füllstoffe zur Erzielung bestimmter mechanischer Eigenschaften. Bevorzugte Füllstoffe mit hoher spezifischer Oberfläche sind pyrogene Kieselsäure oder gefälltes Calciumcarbonat. Darüber hinaus können Füllstoffe mit geringer spezifischer Oberfläche als Extender verwendet werden. Bevorzugt ist hierbei gemahlenes Calciumcarbonat.
(g) bis zu 2 Gew.-% Haftvermittler, vorzugsweise mit funktionellen Gruppen substituierte Alkoxysilane. Besonders bevorzugt sind 3-Aminopropyltriethoxysilan, 3-(2-Aminoethyl)-aminopropyltriethoxysilan und 3-Mercaptopropyltriethoxysilan. Es ist auch möglich, ein Gemisch von mit funktionellen Gruppen substituierter Alkoxysilane einzusetzen.
(h) weitere Zusätze, in Abhängigkeit vom Verwendungszweck der RTV1-Systeme können beispielsweise sein: Farbpigmente, Fungizide (jeweils bis zu 2 Gew.-%).

Die Mischungsherstellung kann kontinuierlich oder diskontinuierlich nach bekannten Verfahren erfolgen. Überraschenderweise wurde gefünden, daß die hydroxyterminierten Polydiorganosiloxane (a) sich in Gegenwart der Alkoxysilane (b) mit den anderen Bestandteilen (c) bis (h) mischen lassen, ohne dass während der Mischungsherstellung eine vorzeitige Vernetzung eintritt und damit die RTV1-Mischungen unbrauchbar werden. Es tritt zu keinem Zeitpunkt eine derartige Viskositätssteigerung der Mischung auf die den Einsatz besonderer Mischaggregate erfordert. Es können die gleichen Mischer verwendet werden, wie sie für die Herstellung anderer RTV1-Systeme breite Anwendung finden. Sowohl transparente, standfeste, als auch hochgefüllte Produkte sind problernlos herstellbar.

Die erfindungsgemäßen RTV1-Siliconkautschuk-Mischungen härten mit hoher Geschwindigkeit und klebfrei zu Produkten mit guten mechanischen Eigenschaften aus. Die Lagerstabilität der Mischungen ist ausgezeichnet. Der besondere Vorteil ist, daß man nun Systeme realisieren kann, bei deren Vernetzung nur Spaltprodukte entstehen, die völlig frei vom toxischen Methanol sind.

### Ausführungsbeispiele

### Beispiel 1

1086 g eines α,ω-Dihydroxypolydimethylsiloxans mit einer Viskosität von 50 Pas und 18 g N-1-(Triethoxysilyl)ethylpyrrolidon-(2) wurden in einem Planetenmischer homogen gemischt und nacheinander mit 850 g eines trimethylsilylterminierten Polydimethylsiloxans mit einer Viskosität von 100 mPas, 91 g Methyltriethoxysilan, 40 g Bis(acetoacetato)diisobutyltitanat und 325 g einer mit Hexamethyldisilazan hydrophobierten pyrogenen Kieselsäure mit einer spezifischen Oberfläche von ca. 200 m²/g versetzt. Anschließend wurde 20 min bei einem Vakuum von ca. 20 mbar gemischt. Die aufdiese Art erhaltene Mischung härtete bei 23 °C und 50 % relativer Luftfeuchte innerhalb von 7 Tagen zu einem Vulkanisat aus, dessen Eigenschaften in Tabelle 1 aufgeführt sind.

### Beispiel 2

1378 g eines α,ω-Dihydroxypolydimethylsiloxans mit einer Viskosität von 50 Pas und 22 g N-1-(Triethoxysilyl)ethylpyrrolidon-(2) wurden in einem Planetenmischer homogen gemischt und nacheinander mit 600 g eines trimethylsilylterminierten Polydimethylsiloxans mit einer Viskosität von 100 mPas, 91 g Methyltriethoxysilan, 60 g Bis(acetoacetato)diisobutyltitanat, 200 g einer pyrogenen Kieselsäure mit einer spezifischen Oberfläche von ca. 150 m²/g und 2400 g einer mit Stearinsäure behandelten gemahlenen Kreide versetzt. Anschließend wurde 20 min bei einem Vakuum von ca. 20 mbar gemischt. Die auf diese Art erhaltene Mischung härtete bei 23 °C und 50 % relativer Luftfeuchte innerhalb von 7 Tagen zu einem Vulkanisat aus, dessen Eigenschaften in Tabelle 1 aufgeführt sind.

### Beispiel 3

1079 g eines α,ω-Dihydroxypolydimethylsiloxans mit einer Viskosität von 50 Pas und 25 g N-1-(Triethoxysilyl)ethyl-N-methylacetamid wurden in einem Planetenmischer homogen gemischt und nacheinander mit 850 g eines trimethylsilylterminierten Polydimethylsiloxans mit einer Viskosität von 100 mPas, 91 g Methyltriethoxysilan, 40 g Bis(acetoacetato)diisobutyltitanat und 325 g einer mit Hexamethyldisilazan hydrophobierten pyrogenen Kieselsäure mit einer spezifischen Oberfläche von ca. 200 m²/g versetzt. Anschließend wurde 20 min bei einem Vakuum von ca. 20 mbar gemischt. Die auf diese Art erhaltene Mischung härtete bei 23 °C und 50 % relativer Luftfeuchte innerhalb von 7 Tagen zu einem Vulkanisat aus, dessen Eigenschaften in Tabelle 1 aufgeführt sind.

### Beispiel 4

1382 g eines α,ω-Dihydroxypolydimethylsiloxans mit einer Viskosität von 50 Pas und 18 g N-1-(Triethoxysilyl)ethylpyrrolidon-(2) wurden in einem Planetenmischer homogen gemischt und nacheinander mit 600 g eines trimethylsilylterminierten Polydimethylsiloxans mit einer Viskosität von 100 mPas, 90 g Tetraethoxysilan, 60 g Bis(acetoacetato)diisobutyltitanat, 150 g einer pyrogenen Kieselsäure mit einer spezifischen Oberfläche von ca. 150 m²/g und 2400 g einer mit Stearinsäure behandelten gemahlenen Weide versetzt. Anschließend wurde 20 min bei einem Vakuum von ca. 20 mbar gemischt. Die auf diese Art erhaltene Mischung härtete bei 23 °C und 50% relativer Luftfeuchte innerhalb von 7 Tagen zu einem Vulkanisat aus, dessen Eigenschaften in Tabelle 1 aufgeführt sind.

### Beispiel 5

560 g eines α,ω-Dihydroxypolydimethylsiloxans mit einer Viskosität von 50 Pas, 240 g eines trimethylsilylterminierten Polydimethylsiloxans mit einer Viskosität von 100 mPas und 8 g N-1-(Triethoxysilyl)ethyl-N-methylacetamid wurden in einem Dissolvermischer homogen gemischt und nacheinander mit 36 g Methyltriethoxysilan, 80 g einer pyrogenen Kieselsäure mit einer spezifischen Oberfläche von ca. 150 m²/g und 7,5 g Tetraisopropyltitanat versetzt. Anschließend wurde 20 min bei einem Vakuum von ca. 20 mbar gemischt. Die auf diese Art erhaltene Mischung härtete bei 23 °C und 50 % relativer Luftfeuchte innerhalb von 7 Tagen zu einem Vulkanisat aus, dessen Eigenschaften in Tabelle 1 aufgeführt sind

### Beispiel 6

Ein Gemisch aus 11,8 g Methyltriethoxysilan und 14,9 g N-1-(Triethoxysilyl)ethyl-N-methylacetamid wurde mit 1,1g Wasser in 10 ml Ethanol versetzt. Nach 24 Stunden wurde das gebildete Produkt zusammen mit dem als Lösungsmittel zugesetzten Ethanol abdestilliert. Es verblieben 20,5g eines oligomeren Hydrolysates, das aus 34 Gew.-% Methyltriethoxysilan, 8 Gew.-% N-1-(Triethoxysilyl)ethyl-N-methylacetamid, 27 Gew-% N-1-[(Diethoxymethylsiloxy)diethoxysilyl]ethylN-methylacetamid, 8 Gew.-% 1,3-Bis(1'-(N-methylacetamido)ethyl)-1,1,3,3-tetraethoxydisiloxan und 23 Gew-% höheren oligomeren Hydrolyse/Kondensationsprodukten des N-1-(Triethoxysilyl)ethyl-N-methylacetamids bestand. Die Zusammensetzung wurde mittels ²⁹Si-NMR-Spektroskopie ermittelt. Anschließend wurden 100g eines α,ω-Dihydroxypolydimethylsiloxans mit einer Viskosität von 50 Pas und 20 g des oben beschriebenen oligomeren Hydrolyse/Kondensattionsproduktes in einem Dissolvermischer homogen gemischt und nacheinander mit 80 g eines trimethylsilylterminierten Polydimethylsiloxans mit einer Viskosität von 100 mPas, 4 g Bis(acetoacetato)diisobutyltitanat und 30g einer mit Hexamethyldisilazan hydrophobierten pyrogenen Kieselsäure mit einer spezifischen Oberfläche von ca. 200 m²/g versetzt. Anschließend wurde 20 min bei einem Vakuum von ca. 20 mbar gemischt. Die auf diese Art erhaltene Mischung härtete bei 23 °C und 50 % relativer Luftfeuchte innerhalb von 7 Tagen zu einem Vulkanisat aus.

**Tabelle 1**

| **Kennwert** | **Methode** | Bsp. 1 | Bsp. 2 | Bsp. 3 | Bsp. 4 | Bsp. 5 |
|---|---|---|---|---|---|---|
| Hautbildungszeit [min] | | 35 | 10 | 20 | 10 | 5 |
| Zugfestigkeit [MPa] | DIN 53504 S2 | 1,67 | 1,00 | 1,50 | 0,69 | 1,12 |
| Reißdehnung [%] | DIN 53504 S2 | 713 | 564 | 680 | 214 | 700 |
| Spannung bei 100% Dehnung [MPa] | DIN 53504 S2 | 0,33 | 0,53 | 0,34 | 0,58 | 0,30 |
| Härte [Shore-A] | DIN 53505 | 17 | 28 | 18 | 24 | 18 |

Die Hautbildungszeit wurde sofort nach Herstellung des Produktes gemessen. Die mechanischen Kennwerte (Zugfestigkeit, Reißdehnung, Spannung bei 100 % Dehnung und Härte) wurden nach 7-tägiger Aushärtung bei 23 °C und 50 % relativer Luftfeuchtigkeit ermittelt.

## Patentansprüche

1. Alkoxyvernetzende RTV1-Siliconkautschuk-Mischungen, enthaltend
(a) mindestens ein hydroxyterminiertes Polydiorganosiloxan der allgemeinen Formel (I)
HO(SiR¹₂O)ₙH (I)
worin R¹ unabhängig voneinander unsubstituierte und/oder substituierte Alkyl-, Alkenyl- oder Arylreste bedeutet und n Werte von 20 bis 2000 annimmt,
(b) mindestens ein Alkoxysilan und/oder dessen partielles Hydrolysat der allgemeinen Formel (II) 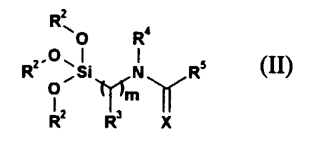 worin R² unabhängig voneinander unsubstituierte und/oder substituierte Alkyl- und/oder Silylreste, R³ unabhängig voneinander unsubstituierte und/oder substituierte, gesättigte und/oder ungesättigte Alkyl- und/oder Arylreste und/oder Wasserstoff, R⁴ unsubstituierte oder substituierte, gesättigte oder ungesättigte Alkyl-, Aryl- oder Acylreste oder Wasserstoff, R⁵ unsubstituierte oder substituierte, gesättigte oder ungesättigte Alkyl- oder Arylreste oder Wasserstoff und X Sauerstoff oder Schwefel bedeuten, wobei die Reste R⁴ und R⁵ alicyclische oder heterocyclische Ringe bilden können, und m entweder 1 oder 2 ist, sowie
(c) mindestens ein Organosilan und/oder dessen partielles Hydrolysat der allgemeinen Formel (III)
R¹ₓSi(OR²)₄₋ₓ (III)
wobei R¹ und R² die oben angegebene Bedeutung aufweisen und x entweder von 0 oder 1 ist.

2. Alkoxyvernetzende RTV1-Siliconkautschuk-Mischungen nach Anspruch 1, dadurch gekennzeichnet, dass in der allgemeinen Formel (I) R¹ Methyl ist und n Werte von 100 bis 1600 annimmt.

3. Alkoxyvernetzende RTV1-Siliconkautschuk-Mischungen nach Anspruch 1, dadurch gekennzeichnet, dass als Alkoxysilane der allgemeinen Formel (II) Verbindungen eingesetzt werden, bei welchen als Rest R² keine Silylgruppen gebunden sind, bzw. deren partielle Hydrolysate.

4. Alkoxyvernetzende RTV1-Siliconkautschuk-Mischungen nach Anspruch 1, dadurch gekennzeichnet, dass als Alkoxysilan der allgemeinen Formel (II) N-1-(Triethoxysilyl)ethyl-pyrrolidon-(2) oder N-2-(Triethoxysilyl)ethyl-pyrrolidon-(2) oder deren Gemische eingesetzt werden.

5. Alkoxyvernetzende RTV1-Siliconkautschuk-Mischungen nach Anspruch 1, dadurch gekennzeichnet, dass als Alkoxysilan der allgemeinen Formel (II) N-1-(Triethoxysilyl)ethyl-N-methylacetamid oder N-2-(Triethoxysilyl)ethyl-N-methylacetamid oder deren Gemische eingesetzt werden.

6. Alkoxyvernetzende RTV-1-Siliconkautschuk-Mischungen nach Anspruch 1, dadurch gekennzeichnet, dass die verwendeten Alkoxysilane der allgemeinen Formel (II) Umsetzungsprodukte von Alkoxysilanen der allgemeinen Formel (II), die keine Silylgruppe enthalten, bzw. von deren partiellen Hydrolysaten mit Organosilanen bzw. deren partiellen Hydrolysaten der allgemeinen Formel (III) sind.

7. Alkoxyvernetzende RTV1-Siliconkautschuk-Mischungen nach Anspruch 1, dadurch gekennzeichnet, dass als Organosilane der allgemeinen Formel (III) Organotriethoxysilane und/oder Tetraethoxysilan eingesetzt werden.

8. Alkoxyvernetzende RTV1-Siliconkautschuk-Mischungen nach Anspruch 1, dadurch gekennzeichnet, dass als partielles Hydrolysat des Alkoxysilans der allgemeinen Formel (II) N-1-[(Methyldiethoxysiloxy)diethoxysilyl]ethylpyrrolidon-(2) eingesetzt wird.

9. Alkoxyvernetzende RTV1-Siliconkautschuk-Mischungen nach Anspruch 1, dadurch gekennzeichnet, dass 0,1 bis 10 Gew.-% Alkoxysilan der allgemeinen Formel (II), bezogen auf das Polydiorganosiloxan der allgemeinen Formel (I), eingesetzt werden.
